# EUROPÄISCHE PATENTSCHRIFT

(11) **EP 2 078 113 B1**
(45) Veröffentlichungstag und Bekanntmachung des Hinweises auf die Patenterteilung: **17.03.2010**
(21) Anmeldenummer: 07819632.6
(22) Anmeldetag: 07.11.2007
(51) Int. Cl.: E01H 5/04, A01D 42/00

(54) **KOMBINATIONSGERÄT ZUM SCHNEEFRÄSEN, MÄHEN, VERTIKUTIEREN, BODENHACKEN ODER DGL.**
COMBINATION DEVICE FOR CUTTING SNOW, MOWING, SCARIFYING, SOIL BREAKING OR THE LIKE
APPAREIL COMBINÉ DE DÉNEIGEMENT, DE TONTE, DE SARCLAGE, DE BINAGE OU ANALOGUES

(30) Priorität: 07.11.2006 DE 202006016981 U
(43) Veröffentlichungstag der Anmeldung: 15.07.2009
(73) Patentinhaber: Lau, Andrew Manson, 78549 Spaichingen (DE)
(72) Erfinder: Lau, Andrew Manson, 78549 Spaichingen (DE)
(74) Vertreter: Neymeyer, Franz
(86) Internationale Anmeldenummer: PCT/EP2007/009616
(87) Internationale Veröffentlichungsnummer: WO 2008/055660

(56) Entgegenhaltungen:
- DE-A1- 3 812 105
- US-A- 4 064 679
- US-A- 5 410 825
- US-A1- 2002 020 083
- US-A1- 2006 096 136

## Beschreibung

Die Erfindung betrifft ein Kombinationsgerät zum Durchführen von verschiedenen Arbeitsaufgaben, wie Schneefräsen, Mähen, Vertikutieren, Bodenhacken, Kehren oder dgl. mit mehreren gegeneinander austauschbaren Arbeitsgeräten, welche in ihrer jeweiligen Ausgestaltung der jeweiligen Arbeitsaufgabe angepasst sind, wobei ein Grundgestell vorgesehen ist, in welchem das jeweilige Arbeitsgerät aufgenommen und drehend antreibbar ist und wobei das jeweils eingebaute Arbeitsgerät von einem sich parallel zur Drehachse des Arbeitsgerätes erstreckenden Gehäuse teilweise umschlossen ist.

Kombinationsgeräte der gattungsgemäßen Art sind schon seit längerem in vielfachen Ausgestaltungen bekannt.

So zeigt die DE 2 017 981 A eine sog. kombinierte Schneefräse, wobei diese Schneefräse hier eine Art Grundgerät bildet. Beim Gegenstand dieser Schneefräse sollen verschiedene Arbeitsgeräte eingesetzt werden können, indem sie durch Ziehen einer Steckachse auswechselbar sind. Bei diesem Kombinationsgerät sind diverse walzenförmige Arbeitsgeräte vorgesehen, welche zum Salzstreuen, Schneeräumen, Eishacken und Bodenfräsen sowie Rasenmähen und Kehren eingesetzt werden sollen. Diese walzenförmigen Arbeitsgeräte werden dementsprechend durch einen motorischen Antrieb, welcher auf dem Grundgerät angeordnet ist, um eine im Wesentlichen horizontal bzw. parallel zum Untergrund verlaufende Achse oder Welle angetrieben.

Zum Schneefräsen wird bei der DE 2 017 981 A eine walzenförmige Frästrommel mit Querschaufeln verwendet. Des Weiteren soll zum Abfräsen von Eis eine Trommel mit Stahlspitzen verwendet werden, welche gegen die Frästrommel entsprechend austauschbar ist. Zum Kehren von Pulverschnee oder Gartenwegen usw. ist eine Kehrwalze mit Stahl- oder Kunststoffborsten vorgesehen. Zum Bodenfräsen hingegen wird eine "Trommelhacke" verwendet. Diese Trommelhacke ist mit einem Schaufelrad kombiniert, welches wiederum abgedeckt ist und mit einem Gebläse zusammenwirkt, welches die gefräste Erde zur Seite bläst. Zum Rasenmähen wird eine Messerwalze verwendet, wobei das geschnittene Gras mittels des auch hier vorgesehenen Schaufelrades (Gebläse) in einen vorgebauten Behälter geblasen werden soll. Dabei soll diese Grasmähwalze zwei Messer aufweisen und zwei dahinter angeordnete Kehrbesen, die das gemähte Gras in das Gebläse kehren sollen.

Des Weiteren soll bei der DE 2 017 981 A im hinteren Bereich dieser kombinierten Schneefräse zusätzlich ein Streugerät angeschlossen werden können, das sowohl zum Streuen von Salz als auch von Kunstdünger Verwendung finden kann. Nachteilig beim Gegenstand dieses Kombinationsgerätes ist, dass dessen Funktionalität nicht für alle Arbeitsaufgaben in gleicher Weise optimal gestaltet werden kann. Insbesondere die Ausgestaltung als Schneefräse enthält keinerlei Auswurfkanal oder dgl., so dass der Schnee beim Fräsvorgang bzw. anschließend an diesen Fräsvorgang nicht über größere Strecken ausgeworfen werden kann.

Des Weiteren ist aus der Druckschrift DE 31 00 904 C2 ein motorisch angetriebenes Räumhandgerät zum Schneeräumen, Kehren oder Vertikutieren bekannt. Dieses Gerät weist ein einheitliches Gehäuse auf, in welchem mehrere walzenartig ausgebildete Arbeitsgeräte einsetzbar sind, wie dies bereits schon zur Druckschrift DE 2 017 981 A beschrieben wurde.

Beim Gegenstand der Druckschrift DE 31 00 904 C2 sind seitlich an einem Gehäuse Laufräder vorgesehen, so dass diese Vorrichtung auch als Vertikutierer verwendet werden kann. Diese Laufräder müssen allerdings zum Vertikutieren separat angebaut werden. Des Weiteren ist die Drehachse bzw. Drehwelle der Arbeitsgeräte je nach Einsatzart nur einseitig gelagert, was wiederum zu diversen Instabilitäten führt. Um dieses Gerät als Kehrmaschine oder Schneefräse einsetzen zu können, wird das Gehäuse um die Drehachse des jeweiligen Arbeitsgerätes gedreht und ist somit in zwei voneinander verschiedenen Schrägstellungen gegenüber dem Untergrund einsetzbar. Allerdings kann beispielsweise beim Schneefräsen oder auch beim Kehren das Niveau bzw. der Abstand des Arbeitsgerätes vom Untergrund nicht eingestellt werden. Insoweit weist diese Vorrichtung erhebliche Nachteile in ihrer Handhabung auf.

Die Druckschrift DE 38 12 105 C2 offenbart ein Kombinationsgerät für Garten und Straße. Bei dieser Vorrichtung ist ein halbseitig nach vorne offenes Gehäuse vorgesehen, in welches unterschiedliche Arbeitsgeräte eingesetzt sind. Diese Arbeitsgeräte befinden sich dabei wiederum in einem eigenen Gehäuseteil, das zusammen mit dem Arbeitsgerät in das Grundgehäuse einsetzbar und dort arretierbar ist. Als Arbeitsgeräte werden auch hier Vorrichtungen zum Rasenmähen, Vertikutieren, Schneefräsen, Kehren und auch ein Gebläse erwähnt.

Gemäß des in dieser Patentschrift DE 38 12 105 C2 offenbarten Hauptanspruches sollen die Arbeitsgeräte seitlich auf das Grundgestell aufschiebbar sein, wo diese dann arretierbar sind. Beim Einsetzen wird des Weiteren eine Arbeitsachse über ein Ritzel mit dem eigentlichen Antrieb mechanisch verbunden. Diese Vorrichtung ist äußert aufwändig aufgebaut und bedarf zum Einsatz der verschiedenen Arbeitsgeräte unterschiedlich ausgestaltete Gehäuse, welche zusammen mit dem jeweils gewählten Arbeitsgerät in das Grundgehäuse einzusetzen sind.

Beim Gegenstand der US 4,064,679 A geht es wiederum um ein Kombinationsgerät, welches zum Rasenmähen, Schneebahnen und Rasenkehren umgerüstet werden kann. Aufgrund der Auswechselbarkeit der einzelnen Arbeitsgeräte wird auch hier ein variabler Einsatz ermöglicht. Allerdings ist ein relativ kompliziertes Traggehäuse vorgesehen, dessen eine Seitenwand kompliziert durch Entfernen von entsprechenden Schraubverbindungen abgenommen werden muss, um die einzelnen Arbeitsgeräte auch auswechseln zu können. Für unterschiedliche Aufgabenstellungen sind hier auch noch zusätzliche Gehäuseabdeckungen oder Gehäuseteile vorgesehen, welche in Abhängigkeit von der jeweiligen Arbeitsaufgabe separat angebaut bzw. abgebaut werden müssen. D. h., dass auch hier das Umrüsten des Kombinationsgerätes relativ kompliziert ist und auch viele "Rüstteile" vorhanden sind, welche bei Nichtgebrauch aufwändig zu lagern sind.

Demgemäß liegt der Erfindung die Aufgabe zugrunde, ein Kombinationsgerät der gattungsgemäßen Art derart auszugestalten, dass einerseits ein Wechsel der verschiedenen Arbeitsgeräte in einfacher Art und Weise möglich ist und andererseits jedes Arbeitsgerät für sich genommen optimal einsetzbar ist.

Die Aufgabe wird erfindungsgemäß zusammen mit den Merkmalen des Oberbegriffes des Anspruchs 1 dadurch gelöst, dass das Gehäuse relativ zum Grundgestell um eine parallel zur Drehachse des jeweiligen Arbeitsgerätes drehbar und in unterschiedlichen der jeweiligen Arbeitsaufgabe entsprechenden Betriebsstellungen fixierbar ist.

Durch die erfindungsgemäße Ausgestaltung des Kombinationsgerätes mit seinem drehbar ausgebildeten Gehäuse wird eine Umrüstung des Kombinationsgerätes für verschiedene Arbeitsaufgaben erheblich erleichtert. Dazu ist das Gehäuse, welches das Arbeitsgerät stets nur teilweise umschließt, derart einstellbar, dass das Arbeitsgerät insbesondere zum Auswechseln frei zugänglich ist. Andererseits kann das Gehäuse in verschiedene Stellungen gebracht werden, so dass die einzelnen Arbeitsaufgaben, welche unterschiedliche Abdeckungsbereiche des Arbeitsgerätes erfordern, stets optimal ausgeführt werden.

Weitere vorteilhafte Ausgestaltungen der Erfindung sind den weiteren Unteransprüchen entnehmbar.

So kann gemäß Anspruch 2 vorgesehen sein, dass das Gehäuse das Arbeitsgerät über einen Umfangswinkel umschließt, der derart gewählt ist, dass das Gehäuse in einer ersten Betriebsstellung im Wesentlichen nach vorne und unten, in einer zweiten Betriebsstellung im Wesentlichen nach unten und in einer dritten Betriebsstellung im Wesentlichen nach unten und hinten offen ist. Durch diese Ausgestaltung ist beispielsweise das Schneefräsen optimal durchführbar, da das Gehäuse in eine nach vorne und unten offene Betriebsstellung gebracht und in dieser fixiert werden kann. Zum Rasenmähen beispielsweise kann das Gehäuse in die erwähnte nach hinten und unten offene Stellung gebracht werden, so dass auch diese Arbeitsaufgabe optimal durchgeführt werden kann.

Gemäß Anspruch 3 kann vorgesehen sein, dass das Gehäuse im Bereich seiner beiden parallel zur Drehachse des Arbeitsgerätes verlaufenden vorderen und hinteren Endkanten jeweils mit vorderen bzw. hinteren Laufrollen, Laufrädern oder Laufwalzen versehen ist und dass sich das Gehäuse in seiner ersten Betriebsstellung auf dem Untergrund mit seinen hinteren Laufrollen, Laufrädern oder Laufwalzen abstützt und dass sich das Gehäuse in seiner zweiten Betriebsstellung nicht über seine Laufrollen, Laufräder oder Laufwalzen auf dem Untergrund abstützt und dass sich das Gehäuse in seiner dritten Arbeitsstellung auf dem Untergrund mit seinen vorderen Laufrollen, Laufrädern oder Laufwalzen abstützt.

Anstatt solcher Laufräder können, ähnlich wie bei einer herkömmlichen Schneefräse, auch Gleitschienen oder dgl. vorgesehen sein, über welche sich das Gehäuse auf dem Untergrund abstützt. Diese Gleitschienen können dabei höhenverstellbar ausgebildet sein. Eine solche Höhenverstellbarkeit kann auch für die Laufrollen, Laufräder oder Laufwalzen vorgesehen sein.

Weiter kann gemäß Anspruch 4 vorgesehen sein, dass das Gehäuse im Bereich seiner hinteren Endkante mit einer Schürfleiste versehen ist, welche zur Aufnahme von Schnee beim Schneefräsen dient und dass das Gehäuse in seinem in seiner ersten Betriebsstellung oben liegenden Wandbereich einen Durchbruch aufweist, welcher mit einer abnehmbaren Auswurfeinrichtung versehen ist. Durch diese Ausgestaltung wird insbesondere das Schneefräsen in der ersten Betriebsstellung des Gehäuses optimiert. Durch die vorgesehenen Laufräder ist ebenso eine Höheneinstellung der Schürfleiste zum Untergrund durchführbar, so dass das Kombinationsgerät optimal an die jeweiligen Arbeitsbedingungen anpassbar ist.

Weiter kann gemäß Anspruch 5 vorgesehen sein, dass das Gehäuse über zwei Seitenwände zwischen zwei seitlich angeordneten Montageplatten des Grundgestells drehbar aufgenommen ist und dass in der ersten Montageplatte des Grundgestells eine Antriebswelle und in der zweiten Montageplatte ein Lagerzapfen vorgesehen sind, welche zur auswechselbaren und drehend antreibbaren Aufnahme der verschiedenen Arbeitsgeräte axial verstellbar sind. Durch diese Ausgestaltung wird ein einfacher Wechsel der Arbeitsgeräte sichergestellt, wobei das Gehäuse zugleich einen äußerst einfachen und kostengünstigen Aufbau aufweist.

Gemäß Anspruch 6 kann vorgesehen sein, dass die Antriebswelle über einen Riementrieb drehend antreibbar ist und dass das jeweilige Arbeitsgerät mit der Antriebswelle drehfest und lösbar gekoppelt ist. Eine solche Antriebsart zeichnet sich insbesondere durch einen geringen Wartungsaufwand aus.

Gemäß Anspruch 7 kann des Weiteren vorgesehen sein, dass das Grundgestell Teil eines Grundgerätes ist und dass das Grundgerät ein Fahrgestell mit Rädern aufweist, über welche das Grundgerät zusammen mit dem Grundgestell und dem jeweiligen Arbeitsgerät auf dem Untergrund fahrbar ist. Das Grundgerät kann dabei gemäß Anspruch 8 mit Rädern versehen sein, die höhenverstellbar sind. Diese Räder können dabei freilaufend ausgebildet sein, so dass das Kombinationsgerät von Hand im Betrieb geschoben werden kann. Zur Arbeitserleichterung können diese Räder aber auch motorisch angetrieben sein, wobei der Radantrieb zu- und abgeschaltet werden kann.

Auch kann dementsprechend gemäß Anspruch 9 ein Antriebsmotor vorgesehen sein, über welchen die unterschiedlichen Arbeitsgeräte über einen Riementrieb oder dgl. drehend antreibbar sind. Dieser Antriebsmotor kann auch über ein entsprechend schaltbares Getriebe zum Antrieb der Räder aus Anspruch 8 dienen.

Die weiteren Unteransprüche betreffen insbesondere die Ausgestaltung der unterschiedlichen, gegeneinander austauschbaren Arbeitsgeräte, wie diese insbesondere zum Schneefräsen, Mähen, Vertikutieren, Bodenhacken oder Kehren zum Einsatz kommen können. Dabei ist die Erfindung mit ihrem drehbaren Gehäuse nicht auf die genannten Arbeitsgeräte beschränkt.

Sofern es sich beim erfindungsgemäßen Kombinationsgerät um ein eigenständiges, von Hand führbares Gerät handelt, können die vorgesehenen Räder auch durch den vorgesehene Antriebsmotor angetrieben sein. Dabei kann diese Antrieb, wie dies beispielsweise bei Schneefräsen oder Rasenmähern bekannt ist, auch variabel zu- oder abgeschaltet werden.

Auch kann das Kombinationsgerät derart ausgestaltet sein, dass es als Anbaugerät an einem Kommunalfahrzeug, Rasentraktor oder dgl. angebaut werden kann. Auch hierbei dient das drehbare Gehäuse zur Vereinfachung des Wechsels des Arbeitsgerätes sowie dem optimalen Einsatz der einzelnen Arbeitsgeräte.

Allen Arbeitsgeräten ist gemeinsam, dass diese etwa walzenartig ausgebildet sind und dass deren jeweilige Drehachse im Betrieb im Wesentlichen parallel zum zu "bearbeitenden" Untergrund und etwa quer zur Fahrrichtung verläuft.

Anhand der Zeichnung wird die Erfindung nachfolgend beispielhaft näher erläutert. Es zeigt:
- Fig. 1: eine perspektivische Darstellung eines erfindungsgemäßen Kombinationsgerätes mit einem drehbaren Gehäuse ohne eingesetztes Arbeitsgerät;
- Fig. 2: eine Frontansicht II des Gehäuses des Kombinationsgerätes aus Fig. 1;
- Fig. 3: eine Schnittdarstellung durch die Lagerung der Antriebswelle des Gehäuses aus Fig. 2;
- Fig. 4: eine perspektivische Darstellung des Gehäuses des Kombinationsgerätes aus Fig. 1;
- Fig. 5: ein Arbeitsgerät in Form einer sog. Frästrommel in perspektivischer Darstellung, welche für den Einsatz des Kombinationsgerätes als Schneefräse gedacht ist;
- Fig. 6: eine perspektivische Darstellung des Kombinationsgerätes aus Fig. 1 mit eingesetzter Frästrommel aus Fig. 5 sowie einer auf das Gehäuse aufgesetzten Auswurfeinrichtung;
- Fig. 7: eine Teilansicht VII des als Schneefräse ausgebildeten Kombinationsgerätes aus Fig. 6;
- Fig. 8: ein Arbeitsgerät in Form einer Mähspindel mit mehreren gleichmäßig am Umfang angeordneten sog. Obermessern;
- Fig. 9: eine perspektivische Darstellung eines sog. Untermessers, welches zusammen mit der Mähspindel aus Fig. 8 im Kombinationsgerät zu einem Rasenmäher kombinierbar ist;
- Fig. 10: eine Unteransicht des Kombinationsgerätes in perspektivischer Darstellung im Bereich des vorderen Gehäuses mit eingesetzter Mähspindel sowie montiertem Untermesser;
- Fig. 11: eine teilweise Seitenansicht XI des Kombinationsgerätes aus Fig. 10;
- Fig. 12: ein Arbeitsgerät in Form einer Vertikutierwalze mit im wesentlichen radial verlaufenden Federelementen;
- Fig. 13: eine teilweise Seitenansicht des Kombinationsgerätes im Bereich seines Gehäuses mit eingesetzter Vertikutierwalze aus Fig. 12;
- Fig. 14: ein Arbeitsgerät in Form einer Hackwalze in perspektivischer Darstellung;
- Fig. 15: eine teilweise Seitenansicht des Kombinationsgerätes mit eingesetzter Hackwalze aus Fig. 14.

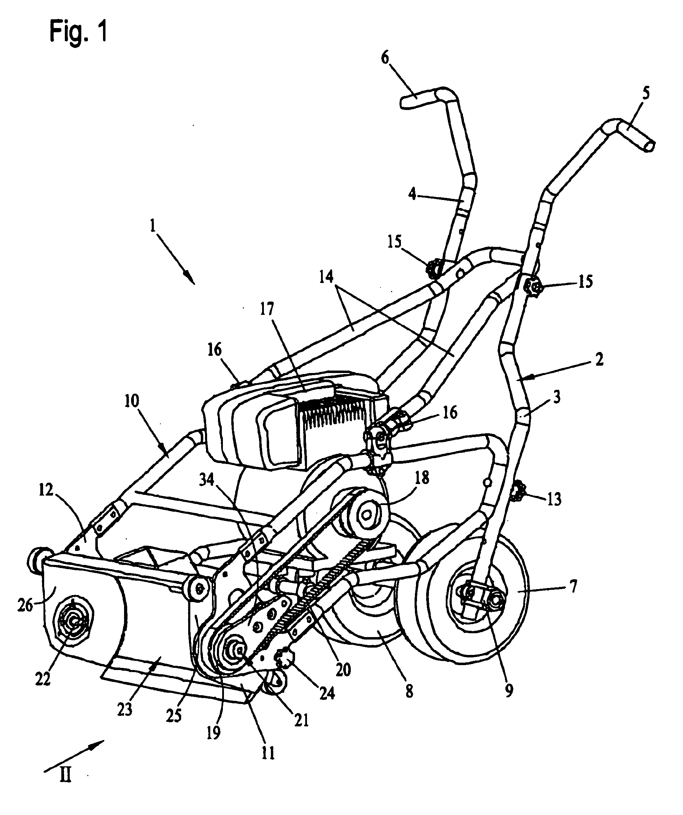

Fig. 1 zeigt ein Kombinationsgerät 1, welches hier in prinzipieller Ausgestaltung beispielhaft perspektivisch dargestellt ist.

Dieses Kombinationsgerät 1 weist in seinem hinteren Bereich ein Fahrgestell 2 auf, welches aus zwei abgebogenen Führungsstangen 3 und 4 besteht, welche im oberen Endbereich jeweils einen Handgriff 5 bzw. 6 bilden. Im unteren Endbereich sind an den Führungsstangen 3 und 4 zwei Räder 7 und 8 angeordnet, welche über entsprechende Befestigungseinrichtungen 9 höhenverstellbar an den Führungsstangen 3 und 4 befestigt sind.

Des Weiteren weist das Kombinationsgerät 1 ein Grundgestell 10 auf, welches in seinem vorderen Endbereich mit zwei seitlich angeordneten, vertikal ausgerichteten Montageplatten 11 und 12 versehen ist. Diese Montageplatten 11 und 12 sind am Grundgestell 10 feststehend montiert und können abnehmbar ausgebildet sein. Dieses Grundgestell 10 ist über entsprechende Halteschrauben 13 mit den unteren Endbereichen der Führungsstangen 3 und 4 abnehmbar verschraubt.

Zur Abstützung und Versteifung des Kombinationsgerätes 1 ist beim vorliegenden Ausführungsbeispiel ein Aussteifungsbügel 14 vorgesehen, welcher einerseits mit den beiden Führungsstangen 3 und 4 über entsprechende Halteschrauben 15 und andererseits über Befestigungseinrichtungen 16 mit dem Grundgestell 10 feststehend gekoppelt ist. Des Weiteren ist im Grundgestell 10 beim vorliegenden Ausführungsbeispiel ein Verbrennungsmotor 17 vorgesehen, welcher außenseitig eine Zahnriemenscheibe 18 aufweist.

Diese Zahnriemenscheibe 18 steht mit einer zweiten Antriebsscheibe 19 über einen Zahnriemen 20 in Verbindung. Diese Antriebsscheibe 19 dient zum Antrieb einer Antriebswelle 21, deren genauere Ausgestaltung später noch näher erläutert wird.

Koaxial zu dieser Antriebswelle 21 ist im Bereich der rechten "hinteren" Montageplatte 12 ein Lagerzapfen 22 vorgesehen, welcher fluchtend zur Antriebswelle 21 ausgerichtet ist. Dieser Lagerzapfen 22 sowie die Antriebswelle 21 können in Achsrichtung ihrer Drehachse axial nach außen zurückgezogen werden, so dass ein Einsetzen eines Arbeitsgerätes in einfacher Weise durchführbar ist.

An dieser Stelle sei bemerkt, dass die Grundkonstruktion des Kombinationsgerätes 1 auch beliebig anders ausgebildet sein kann. Wichtig sind die beiden Montageplatten 11 und 12, zwischen welchen ein Gehäuse 23 aufgenommen ist. Dieses Gehäuse 23 ist im Bereich der Antriebswelle 21 sowie des Lagerzapfens 22 an den beiden Montageplatten 12 und 13 schwenkbar bzw. drehbar gelagert und befindet sich in der in Fig. 1 dargestellten Arbeitsposition in einer ersten Betriebsstellung. In dieser ersten Betriebsstellung wird das Gehäuse 23 durch zwei Sicherungsbolzen 24 fixiert, von welchen in Fig. 1 lediglich einer sichtbar ist.

Des Weiteren ist aus Fig. 1 ersichtlich, dass das Gehäuse 23 zwei Seitenwände 25 und 26 aufweist, über welche das Gehäuse 23 um eine parallel zur Antriebswelle 21 bzw. zum Lagerzapfen 22 verlaufende Drehachse drehbar aufgenommen ist.

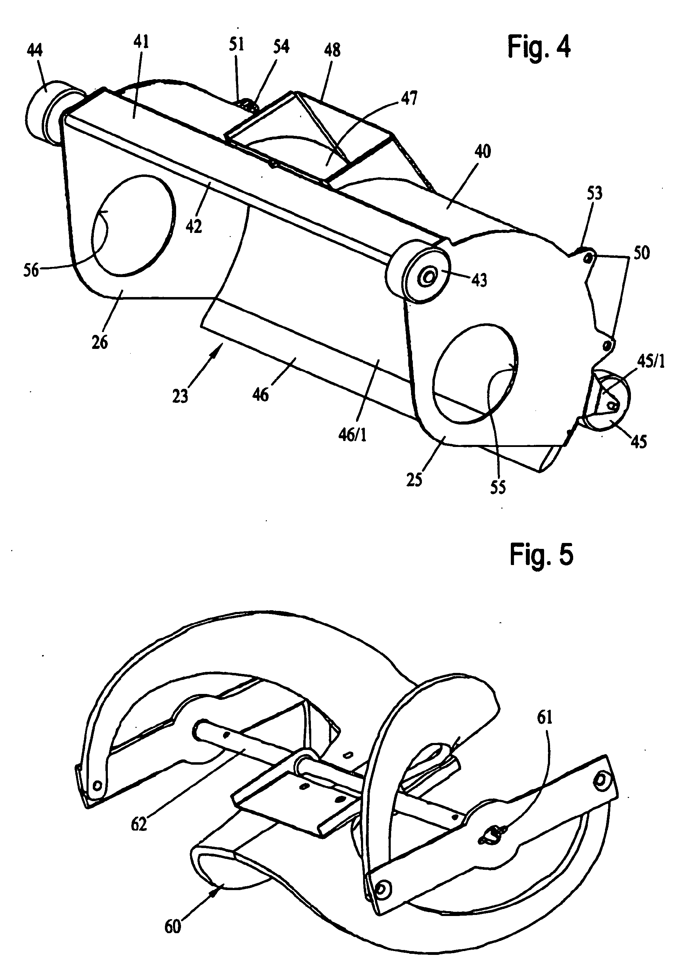

Die weitere Ausgestaltung dieses Gehäuses 23 wird später noch zu Fig. 4 näher erläutert.

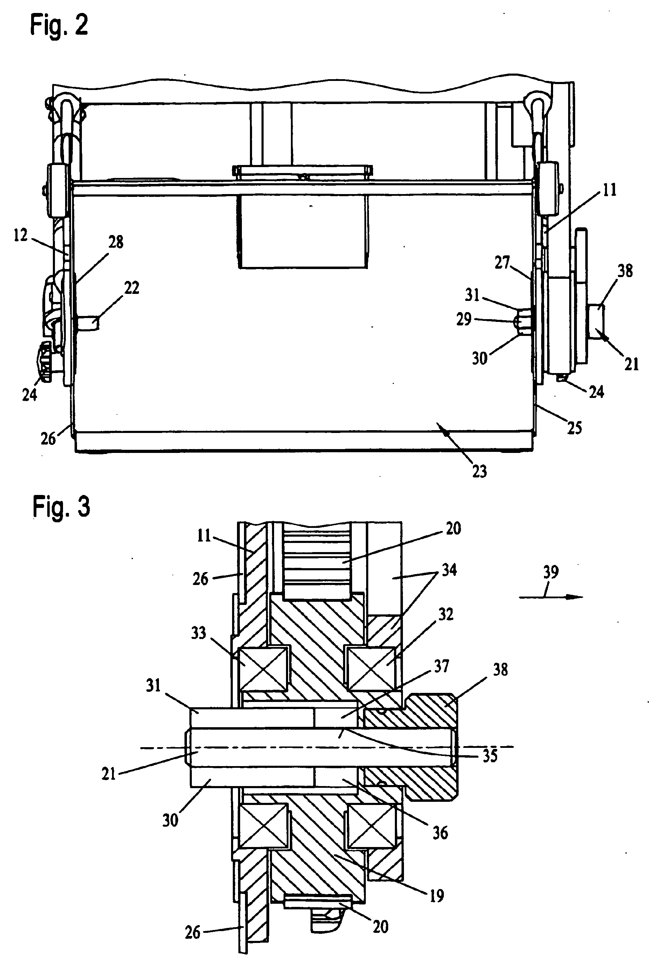

Fig. 2 zeigt eine Frontansicht II insbesondere des Gehäuses 23 aus Fig. 1. Es ist erkennbar, dass das Gehäuse 23 mit seinen beiden Seitenwänden 25 und 26 zwischen den beiden Montageplatten 11 und 12 passend aufgenommen wird. Diese Montageplatten 11 und 12 weisen innenseitig nach innen vorstehende Lagerscheiben 27 und 28 auf, welche das Gehäuse 23 mit seinen Seitenwänden 25 und 26 drehbar aufnehmen. In Fig. 2 ist des Weiteren auch der zweite Sicherungsbolzen 24 erkennbar.

Außerdem ist ersichtlich, dass der Lagerzapfen 22 in das Gehäuse 23 hineinragt. Auch die Antriebswelle 21 weist einen Antriebsabschnitt 29 auf, welcher in das Gehäuse 23 hineinragt. Dieser Antriebsabschnitt 29 weist zwei sich diametral gegenüberliegende, radial vorstehende Antriebsstege 30 und 31 auf, mit welchen die Antriebswelle 21 mit einem entsprechend in das Gehäuse 23 eingesetzten Arbeitsgerät in drehfeste Verbindung bringbar ist.

Fig. 3 zeigt eine vergrößerte Darstellung der Lagerung der Antriebswelle 21 im Bereich der Montageplatte 11. Es ist erkennbar, dass die Antriebsscheibe 19 in ihren axialen Endbereichen jeweils über ein Wälzlager 32 bzw. 33 drehbar gelagert ist. Das Wälzlager 33 sitzt dabei in einem entsprechenden Lagersitz der Montageplatte 11. Außenseitig ist im Abstand zu dieser Montageplatte 11 eine Lagerplatte 34 vorgesehen, welche ebenfalls in Fig. 1 dargestellt ist und feststehend mit der Montageplatte 11 verbunden ist. Die Antriebsscheibe 19 weist eine zentrale Lagerbohrung 35 auf, welche mit zwei sich diametral gegenüber liegenden Aufnahmeschlitzen 36 und 37 versehen ist. In diese Aufnahmeschlitze greifen die beiden Antriebsstege 30 und 31 der Antriebswelle 21 formschlüssig und axial verstellbar ein. Aus der in Fig. 3 dargestellten Eingriffsposition ist die Antriebswelle über einen aufgesetzten Anschlagkopf 38 in Richtung des Pfeils 39 nach außen entgegen einer Federkraft einer nicht näher dargestellten Axialdruckfeder soweit verstellbar, bis ein entsprechendes Arbeitsgerät zwischen die beiden Seitenwände 25 und 26 des Gehäuses 23 einsetzbar ist.

In ähnlicher Art und Weise kann auch die Lagerung des Lagerzapfens 22 ausgebildet sein. Des Weiteren ist in Fig. 3 noch der Zahnriemen 20 erkennbar.

Fig. 4 zeigt, wie bereits oben erwähnt, das Gehäuse 23 in perspektivischer Darstellung. Dabei ist in Fig. 4 dieses Gehäuse 23 in seiner ebenfalls in Fig. 1 dargestellten ersten Betriebsstellung gezeigt. Dieses Gehäuse 23 bildet eine teilzylindrische Außenwand 40, mit welcher die beiden Seitenwände 25 und 26 beispielsweise verschweißt sind. Im oberen, vorderen Endbereich ist an der Außenwand 40 außenseitig ein Verstärkungssteg 41 aufgeschweißt, in dessen vorderen Endbereich eine Lagerachse 42 eingelassen ist. Diese Lagerachse überragt die beiden Seitenwände 25 und 26 seitlich nach außen, so dass auf diese jeweils ein Laufrad 43 bzw. 44 drehbar aufsetzbar ist.

In seinem hinteren, unteren Endbereich bildet die Außenwand 26 eine Lagerlasche 45/1, welche zusammen mit einer weiteren, in der Zeichnung nicht erkennbaren, zweiten Lagerlasche zur drehbaren Lagerung eines hinteren Laufrades 45 dient.

Des Weiteren ist aus Fig. 4 erkennbar, dass im hinteren unteren Bereich der Endkante 46/1 des Gehäuses 23 eine Schürfleiste 46 vorgesehen ist, welche in ihrer Funktion einer Schürfleiste einer Schneefräse entspricht.

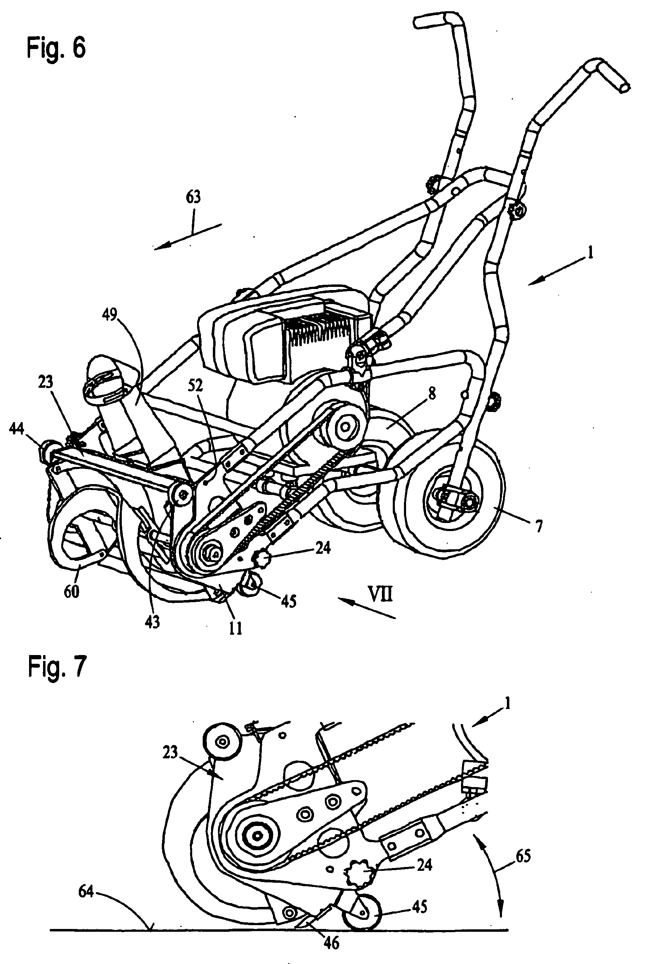

Des Weiteren weist die Außenwand 40 im oberen Bereich einen Durchbruch 47 auf, in dessen Umgebungsbereich ein Auswurfkanal 48 angeordnet ist. Dieser Auswurfkanal 48 dient zur abnehmbaren Montage einer Auswurfeinrichtung 49, wie diese in Fig. 6 dargestellt ist und allgemein aus dem Stand der Technik bei Schneefräsen bekannt ist.

Des Weiteren bilden die beiden Seitenwände 25 und 26 radial vorstehende Lageraugen 50 bzw. 51, welche zur Fixierung der jeweils eingestellten Betriebsstellung des Gehäuses 23 zwischen den beiden Montageplatten 11 und 12 dienen. In entsprechender Anordnung weist auch die Montageplatte 11 bzw. 12 entsprechende Durchgangsbohrungen 52 auf, von welchen insbesondere in Fig. 6 eine erkennbar ist. Die zweite Durchgangsbohrung im unteren Endbereich der Seitenwand 11 ist in der dargestellten Ausführungsvariante vom Sicherungsbolzen 24 verdeckt, welcher diese Durchgangsbohrung durchragt und beispielsweise in das untere Lagerauge 50 der beiden Lageraugen der Seitenwand 25 des Gehäuses 23 feststehend hineinragt. Zur Fixierung dieses Sicherungsbolzens 24 können die Lageraugen 50 bzw. 51 mit entsprechenden aufgeschweißten Haltemuttern 53 bzw. 54 versehen sein.

Des Weiteren ist auf Fig. 4 ersichtlich, dass beide Seitenwände 25 und 26 jeweils einen kreisrunden Durchbruch 55 bzw. 56 aufweisen, über welchen diese an der jeweiligen Montageplatte 11 bzw. 12 drehbar gelagert sind, wie dies in Fig. 2 angedeutet ist.

Für den Einsatz des Kombinationsgerätes 1 aus den Fig. 1 und 6 als Schneefräse zeigt Fig. 5 eine sog. Frästrommel 60, welche in ihrem vorderen Endbereich ein Kupplungselement 61 aufweist, mit welchem die Frästrommel 60 mit der Antriebswelle 21 und deren beiden Antriebsstegen 30 und 31 in drehfeste Verbindung bringbar ist. Auf der gegenüberliegenden Seite dieses Kupplungselementes 61 bildet die in Fig. 5 dargestellte durchgehende Drehachse 62 eine entsprechende Einsteckbohrung, welche in Fig. 5 nicht näher dargestellt ist. Eine nähere Beschreibung dieser Frästrommel 60 erübrigt sich, da solche Konstruktionen weithin aus dem Stand der Technik bekannt sind.

Fig. 6 zeigt das Kombinationsgerät 1 in seinem als Schneefräse ausgebauten Zustand. Es ist erkennbar, dass das Gehäuse 23 die Frästrommel 60 teilweise umschließt und das Gehäuse 23 somit in Fahrtrichtung des Pfeils 63 nach vorne und nach unten offen ist. Die in Fig. 4 beschriebenen Laufräder 43 und 44 sind in dieser Betriebsstellung des Gehäuses 23 außer Funktion. Demgegenüber sind die Laufräder 45, von welchen analog zu den Laufrädern 43 und 44 zwei Stück in entsprechender Anordnung am Grundgehäuse 23 vorgesehen sind, zur Abstützung des Kombinationsgerätes 1 in dessen vorderem Endbereich vorgesehen. Dies geht insbesondere aus der teilweisen Seitenansicht der Fig. 7 hervor.

Es ist erkennbar, dass sich die Laufräder 45 auf dem Untergrund 64 abstützen und somit durch diese Laufräder 45 der vertikale Abstand der Schürfleiste 46 vom Untergrund definiert ist. Durch entsprechende Höhenverstellung der aus Fig. 6 ersichtlichen Räder 7 und 8 wird eine Schwenkbewegung in Richtung des Doppelpfeiles 65 (Fig. 7) des gesamten Kombinationsgerätes 1 um die Drehachse der Laufräder 45 bewirkt, so dass dadurch der vertikale Abstand der Schürfleiste 46 vom Untergrund 64 einstellbar ist. Insoweit wird durch die besondere Ausgestaltung des Gehäuses 23 mit seinen Laufrädern 45 ein Kombinationsgerät 1 zur Verfügung gestellt, bei welchem die Funktion "Schneefräsen" optimal an die gegebenen Bedingungen anpassbar ist. Weiter ist auch aus Fig. 7 ersichtlich, dass die dort dargestellte erste Betriebsstellung durch den Sicherungsbolzen 24 festgelegt ist.

Dabei kann alternativ oder ergänzend zu der Höhenverstellung der beiden Räder 7 und 8 auch vorgesehen sein, dass diese Betriebsstellung in gewissen Grenzen leicht verstellbar ist, so dass auch dadurch der vertikale Abstand der Schürfleiste 46 vom Untergrund 64 in einfacher Weise einstellbar ist.

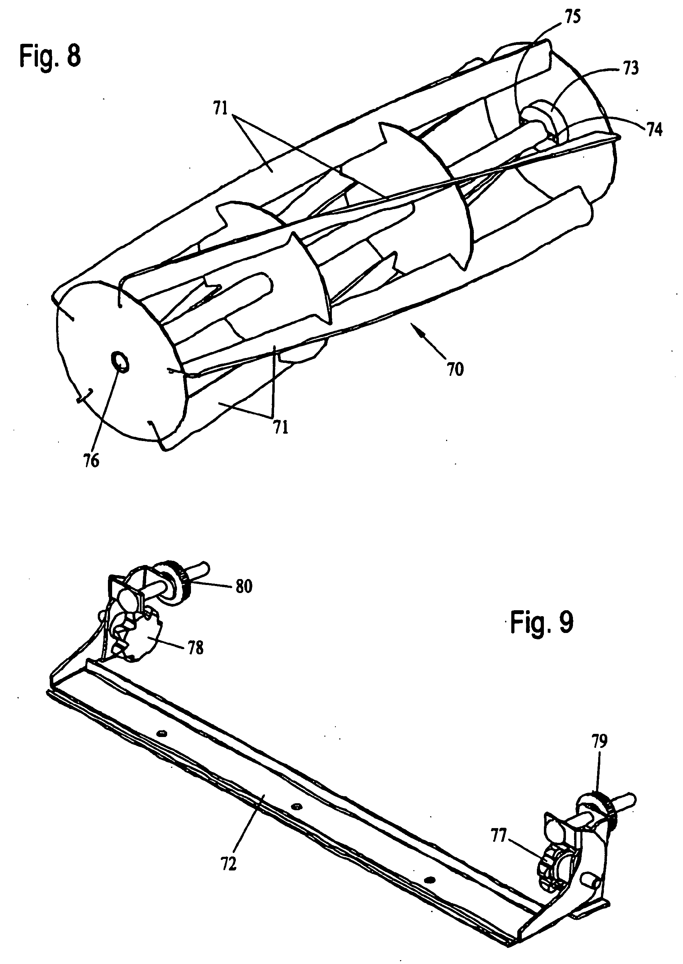

Fig. 8 zeigt eine Mähspindel 70, wie diese aus dem Stand der Technik bekannt ist. Diese Mähspindel 70 weist, wie aus Fig. 8 ersichtlich ist, mehrere sog. Obermesser 71 auf, welche in Zusammenwirken mit einem sog. Untermesser 72, wie dieses beispielhaft in Fig. 9 dargestellt ist, das Abschneiden der Grashalme bewirkt. Aus Fig. 8 ist weiter ersichtlich, dass im rechten Endbereich der Mähspindel ein Lagerzylinder 73 vorgesehen ist, von welchem zwei radial verlaufende Aufnahmeschlitze 74 und 75 ausgehen. Mit diesen Aufnahmeschlitzen 74 und 75 ist die Mähspindel 70 mit dem Antriebsabschnitt 29 der Antriebswelle 21 sowie dessen beiden radial vorstehenden Antriebsstegen 30 und 31 (Fig. 2) in drehfeste Verbindung bringbar. Auf der gegenüberliegenden Seite weist die Mähspindel 70 eine Lagerbohrung 76 auf, in welche der Lagerzapfen 22 der Montageplatte 12 aus Fig. 2 im montierten Zustand eingreift.

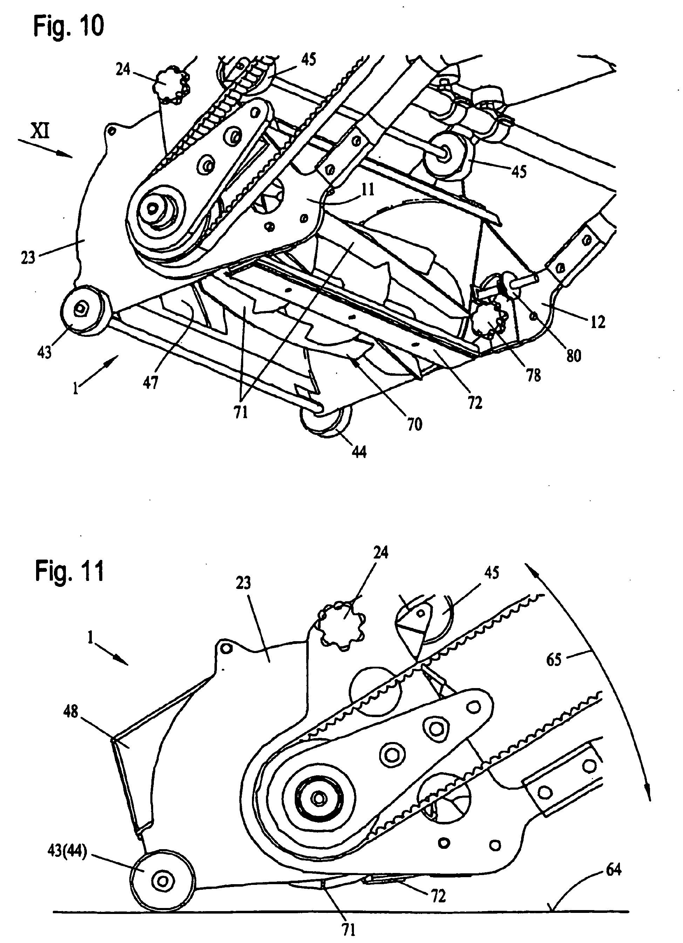

Das Untermesser 72 weist zwei seitlich angeordnete Montagebolzen 77 und 78 auf, mit welchen das Untermesser 72 an den Montageplatten 11 und 12 feststehend montierbar ist, wie dies beispielhaft in der Unteransicht aus Fig. 10 des Kombinationsgerätes 1 erkennbar ist. Des Weiteren sind zur Einstellung des Untermessers 72 zwei seitlich angeordnete Stellschrauben 79 und 80 vorgesehen, so dass die Schnitteigenschaften zwischen den Obermessern 71 und dem Untermesser 72 den jeweiligen Bedingungen zum Rasenmähen anpassbar sind. Auch kann hier vorgesehen sein, dass die Mähspindel 70 zusammen mit dem Untermesser 72 eine gemeinsame Baugruppe bilden und gemeinsam in das Gehäuse 23 bzw. das Kombinationsgerät 1 einsetzbar sind.

Weiter ist aus Fig. 10 und aus Fig. 11 ersichtlich, dass sich das Gehäuse 23 für diese Funktion "Rasenmähen" in einer "dritten" Betriebsstellung befindet. In dieser "dritten" Betriebsstellung sind die beiden insbesondere aus Fig. 10 ersichtlichen Laufräder 45 außer Funktion. Demgegenüber befinden sich die beiden Laufräder 43 und 44 auf dem Untergrund 64, so dass über diese Laufräder 43 und 44 der "Vorbau" des Kombinationsgerätes 1 auf dem Untergrund 64 abgestützt ist. Dadurch ergibt sich entsprechend auch der vertikale Abstand sowohl der Obermesser 71 als auch des Untermessers 72 vom Untergrund 64, wie dies aus Fig. 11 erkennbar ist.

Weiter ist aus Fig. 10 und 11 ersichtlich, dass diese dritte Betriebsstellung des Gehäuses 23 durch die im oberen Bereich vorgesehenen Sicherungsbolzen 24 festgelegt ist. Auch hier ist durch eine entsprechende Vertikalverstellung bzw. Höhenverstellung der Räder 7 und 8 an den zugehörigen Führungsstangen 3 und 4 eine Schwenkbarkeit des gesamten Kombinationsgerätes 1 in Richtung des Doppelpfeiles 65 um die Drehachsen der Laufräder 43 und 44 bewirkbar. Damit ist auch in der Funktion "Rasenmähen" eine Abstandseinstellung der Obermesser 71 sowie des Untermessers 72 vom Untergrund 64 und damit eine Einstellung der gewünschten Schnitthöhe des nun als Rasenmäher fungierenden Kombinationsgerätes 1 erreichbar.

In dieser Konfiguration des Kombinationsgerätes 1 wird selbstverständlich die Auswurfeinrichtung 49 der "Schneefräse" aus Fig. 6 nicht benötigt und ist dementsprechend demontiert. Der aus Fig. 10 ersichtliche Durchbruch 47 mit seinem aus Fig. 11 erkennbaren Auswurfkanal 48 ist in dieser Konfiguration als Rasenmäher vorzugsweise beispielsweise durch eine einfache Verschlussplatte geschlossen, welche in der Zeichnung nicht näher bezeichnet ist.

Weiter kann in dem aus Fig. 10 ersichtlichen hinter dem Gehäuse 23 liegenden Freiraum auch ein nicht näher dargestellter Fangkorb angeordnet sein, welcher zum Auffangen des gemähten Grases dient. Auch dient ein solcher Fangkorb zum Schutz einer hinter dem Kombinationsgerät 1 beim Rasenmähen gehenden Person. Ein solcher Fangkorb kann auch für eine Konfiguration des Kombinationsgerätes als Vertikutierer, Bodenhacke oder Kehreinrichtung eingesetzt werden.

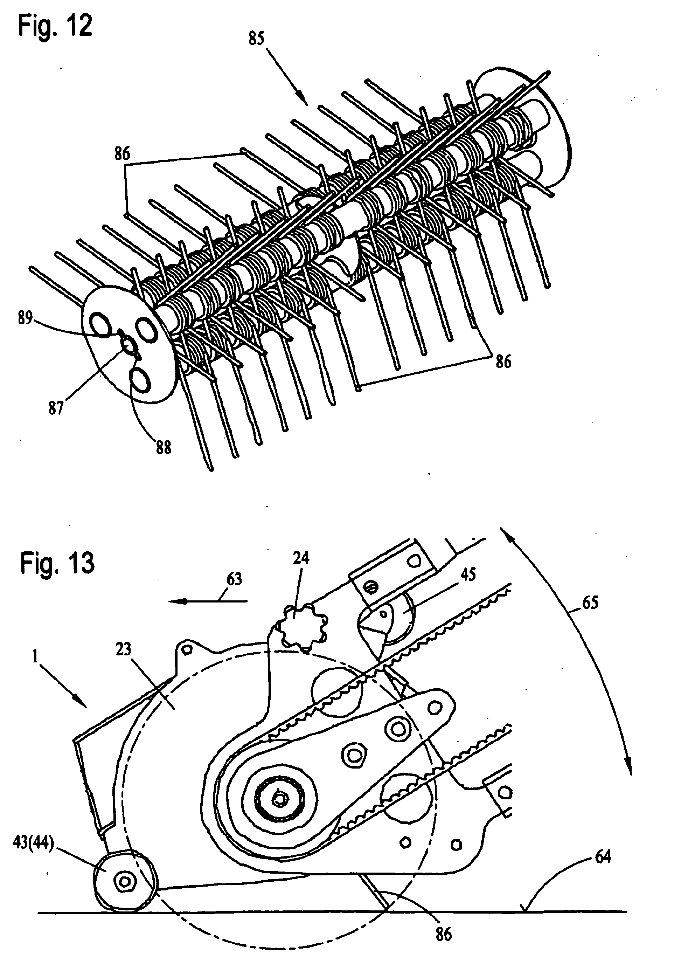

Fig. 12 und 13 zeigen eine weitere Konfiguration des Kombinationsgerätes 1, wobei in Fig. 12 das hierfür notwendige Arbeitsgerät in Form einer Vertikutierwalze 85 dargestellt ist. Diese Vertikutierwalze 85 weist beim vorliegenden Ausführungsbeispiel mehrere stabförmige, radial verlaufende Federelemente 86 auf, welche im Betrieb zur Auflockerung des Untergrundes bzw. zum "Lüften" eines Rasens dienen. Solche Ausgestaltungen von Vertikutierwalzen 85 sind hinreichend aus dem Stand der Technik bekannt, wobei auch hier eine Vertikutierwalze vorgesehen sein kann, welche mit radialen Fräsmessern ausgestattet ist.

Weiter ist aus Fig. 12 ersichtlich, dass die Vertikutierwalze 85 in ihrem einen Endbereich eine Aufnahmebohrung 87 mit zwei Radialschlitzen 88 und 89 aufweist, mit welchen die Vertikutierwalze 85 mit dem Antriebsabschnitt 29 der Antriebswelle 21 und dessen beiden Antriebsstegen 30 und 31 in drehfeste Verbindung bringbar ist (s. Fig. 2).

Fig. 13 zeigt diese Konfiguration des Kombinationsgerätes 1 als Vertikutierer. Es ist erkennbar, dass das Gehäuse 23 sich hier in derselben dritten Betriebsstellung befindet wie bei der Konfiguration des Kombinationsgerätes 1 als Rasenmäher, wie dies insbesondere in Fig. 11 dargestellt ist. Dementsprechend ist diese Betriebsstellung auch durch die Sicherungsbolzen 24 fixiert, wobei auch hier die Laufräder 45 außer Funktion sind. Das Gehäuse 23 stützt sich auf dem Untergrund 64 über dessen Laufräder 43 und 44 ab, so dass die Eindringtiefe der Federelemente 86 in den Untergrund definiert einstellbar ist. Durch die Höhenverstellung der Räder 7 und 8 an den beiden Führungsstangen 3 und 4 (Fig. 1) wird auch hier eine Schwenkbewegung des gesamten Kombinationsgerätes 1 um die Lagerachse der Laufräder 43 und 44 in Richtung des Doppelpfeils 65 bewirkt, so dass die Eindringtiefe der Federelemente 86 in den Untergrund 64 einstellbar ist.

Damit kann das Kombinationsgerät auch in seiner Funktion als Vertikutierer in einfacher Weise auf die gegebenen Arbeitsbedingungen eingestellt werden. Das Gehäuse 23 ist dabei, wie dies aus Fig. 13 andeutungsweise erkennbar ist, nach unten und entgegen der Fahrtrichtung des Pfeiles 63 nach hinten offen.

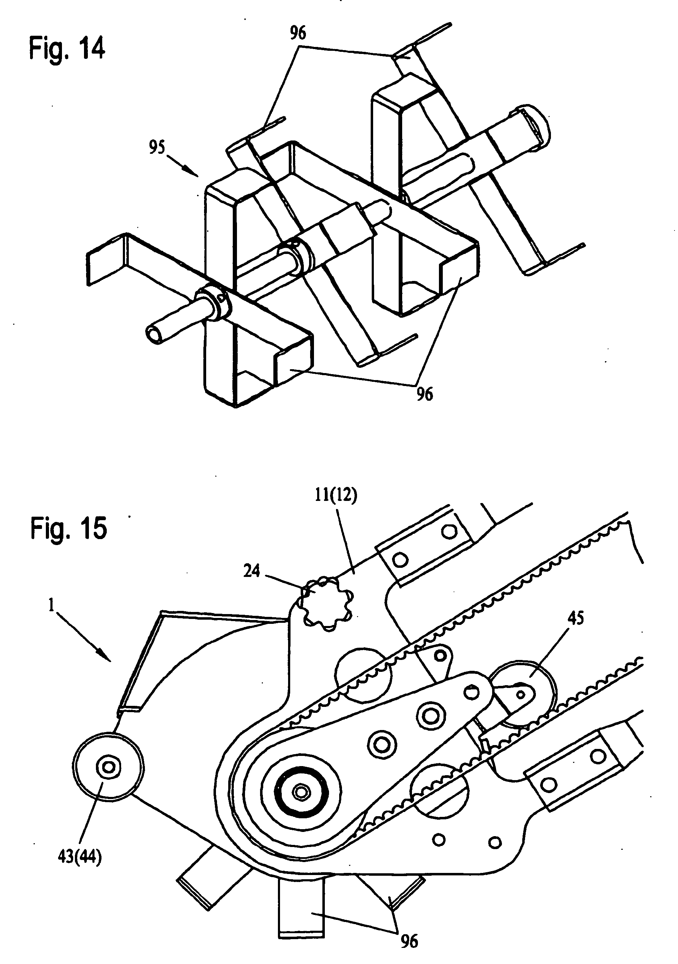

In einer weiteren beispielhaft dargestellten Funktionsart kann das Kombinationsgerät 1 auch als Bodenhacke eingesetzt werden. Hierzu ist ein in Fig. 14 beispielhaft dargestelltes Arbeitsgerät in Form einer Hackwalze 95 vorgesehen. Diese Hackwalze 95 weist, wie dies aus dem Stand der Technik hinreichend bekannt ist, mehrere sog. Hackmesser 96 auf, welche zur entsprechenden Bodenauflockerung bzw. zum Bodenhacken in den Untergrund im Betrieb eindringen.

Fig. 15 zeigt hierzu eine teilweise Seitenansicht des Kombinationsgerätes 1, bei welchem diese Hackwalze 95 mit ihren Hackmessern 96 eingesetzt ist. Es ist erkennbar, dass sich in dieser Position sowohl die Laufräder 45 als auch die Laufräder 43 und 44 außer Funktion befinden. D.h., dass das Gehäuse 23 in einer zweiten, mittleren Betriebsstellung angeordnet und in diesem Falle im unteren hinteren Bereich der beiden Montageplatten 11 und 12 durch den Sicherungsbolzen 24 fixiert ist. Aufgrund dieser Ausgestaltung ragen die Hackmesser 96 relativ weit unterhalb aus dem Gehäuse 23 heraus, so dass hier auch eine ausreichende Hacktiefe erreichbar ist. Durch entsprechende Handhabung über die Handgriffe 5 und 6 des Kombinationsgerätes 1 ist somit auch eine optimale Lockerung eines aufzuhackenden Untergrundes möglich.

Anstatt dieser beispielhaft dargestellten Arbeitsgeräte können natürlich auch weitere, walzenförmige Arbeitsgeräte wie eine Kehrwalze o. dgl. eingesetzt werden. Durch entsprechendes Schwenken bzw. Drehen des Gehäuses 23 kann auch eine solche Kehrwalze in der gewünschten Art und Weise entweder nach hinten oder teilweise nach vorne abgedeckt werden, so dass auch eine Funktion als Kehrmaschine des Kombinationsgerätes 1 in einfacher Art und Weise erreichbar ist. Wird in der Funktion "Kehren" die Kehrwalze nach vorne abgedeckt, so kann im hinten unteren Bereich auch eine Auffangvorrichtung für das Kehrgut eingesetzt werden. Durch diese Ausgestaltung ist insbesondere eine Drehrichtungsumkehr für die Funktion "Kehren" des Kombinationsgerätes nicht notwendig.

Insbesondere ist auch die Arbeitshöhe des jeweiligen Arbeitsgerätes bzw. dessen Abstand vom Untergrund in der ersten Betriebsstellung und in der zweiten Betriebsstellung in einfacher Weise einstellbar, so dass auch beim Einsatz als Kehrmaschine mit einer Kehrwalze deren Reinigungswirkung effektiv durch die Höhenverstellung der Räder 7 und 8 einstellbar ist. Auch in einer solchen Konfiguration kann hinter der Kehrwalze eine Auffangeinrichtung für das Kehrgut vorgesehen sein, so dass insbesondere die Antriebsrichtung der Kehrwalze nicht "umgekehrt" werden muss und gleichzeitig eine hinter dem Kombinationsgerät 1 gehende Person vor nach hinten geschleudertem Kehrgut geschützt ist. Es ist aber auch eine entgegen der Fahrtrichtung angetriebene Kehrwalze vorstellbar, so dass das Kehrgut nach vorne gekehrt wird. In diesem Fall ist eine Auffangeinrichtung nicht notwendig. In einer solchen "umgekehrten" Antriebsrichtung befindet sich das Gehäuse 23, wie beim Schneefräsen, in seiner nach vorne und unten offenen ersten Betriebsposition.

Es ist somit erkennbar, dass insbesondere durch die drehbare Ausgestaltung des Gehäuses 23 jede Betriebsart des Kombinationsgerätes 1 optimal den jeweils herrschenden Arbeitsbedingungen anpassbar ist. Das Auswechseln der Arbeitsgeräte bzw. Austauschen wird dabei erheblich durch die spezielle Konstruktion einerseits der Antriebswelle 21 und andererseits des Lagerzapfens 22 vereinfacht, da durch jeweiliges Zurückziehen das Arbeitsgerät in einfachster Art und Weise in das Kombinationsgerät 1 bzw. das Gehäuse einsetzbar ist. Der Wechsel der Arbeitsgeräte findet dabei in der ersten Betriebsstellung des Gehäuses 23 statt, wie diese beispielhaft in Fig. 1 dargestellt ist.

Auch ist vorstellbar, den vorderen Teil des Kombinationsgerätes 1 mit seinen Montageplatten 11 und 12 sowie dem Gehäuse 23 als Anbaugerät z.B. zum Anbau an Kommunalfahrzeuge auszubilden. Auch für einen solchen Einsatz ist die einfache Umrüstbarkeit und optimale Einstellbarkeit durch das drehbare Gehäuse von Vorteil.

## Patentansprüche

1. Kombinationsgerät (1) zum Durchführen von verschiedenen Arbeitsaufgaben, wie Schneefräsen, Mähen, Vertikutieren, Bodenhacken oder dgl. mit mehreren gegeneinander austauschbaren Arbeitsgeräten (60, 70,85, 95), welche in ihrer jeweiligen Ausgestaltung der jeweiligen Arbeitsaufgabe angepasst sind, wobei ein Grundgestell (10) vorgesehen ist, in welchem das jeweilige Arbeitsgerät (60, 70, 85, 95) aufgenommen und drehend antreibbar ist und wobei das jeweils eingebaute Arbeitsgerät (60, 70, 85, 95) von einem sich parallel zur Drehachse des Arbeitsgerätes erstreckenden Gehäuse (23) teilweise umschlossen ist,
**dadurch gekennzeichnet,**
**dass** das Gehäuse (23) relativ zum Grundgestell (10) um eine parallel zur Drehachse des jeweiligen Arbeitsgerätes (60, 70, 85, 95) drehbar und in unterschiedlichen der jeweiligen Arbeitsaufgabe entsprechenden Betriebsstellungen fixierbar ist.

2. Kombinationsgerät nach Anspruch 1, **dadurch gekennzeichnet, dass** das Gehäuse (23) das Arbeitsgerät (60, 70, 85, 95) über einen Umfangswinkel umschließt, der derart gewählt ist, dass Gehäuse (23) in einer ersten Betriebsstellung im Wesentlichen nach vorne und unten, in einer zweiten Betriebsstellung im Wesentlichen nach unten und in einer dritten Betriebsstellung im Wesentlichen nach unten und hinten offen ist.

3. Kombinationsgerät nach Anspruch 1 oder 2, **dadurch gekennzeichnet, dass** das Gehäuse (23) in Bereich seiner beiden parallel zur Drehachse des Arbeitsgerätes verlaufenden vorderen und hinteren Endkanten (41 und 46/1) jeweils mit vorderen bzw. hinteren Laufrollen oder Laufrädern (43, 44 bzw. 45) versehen ist und,
dass sich das Gehäuse (23) in seiner ersten Betriebsstellung auf dem Untergrund (64) mit seinen hinteren Laufrollen oder Laufrädern (45) abstützt und,
dass sich das Gehäuse (23) in seiner zweiten Betriebsstellung nicht über seine Laufrollen oder Laufräder (43, 44 bzw. 45) auf dem Untergrund (64) abstützt und,
dass sich das Gehäuse (23) in seiner dritten Arbeitsstellung auf dem Untergrund (64) mit seinen vorderen Laufrollen oder Laufrädern (43, 44) abstützt.

4. Kombinationsgerät nach Anspruch 2 oder 3, **dadurch gekennzeichnet, dass** das Gehäuse (23) im Bereich seiner hinteren Endkante (46/1) mit einer Schürfleiste (46) versehen ist, welche zur Aufnahme von Schnee beim Schneefräsen dient und, dass das Gehäuse (23) in seinem in seiner ersten Betriebsstellung oben liegenden Wandbereich einen Durchbruch (47) aufweist, welcher mit einer abnehmbaren Auswurfeinrichtung (49) versehen ist.

5. Kombinationsgerät nach einem der Ansprüche 1 bis 4, **dadurch gekennzeichnet**, das Gehäuse (23) über zwei Seitenwände (25, 26) zwischen zwei seitlich angeordneten Montageplatten (11, 12) des Grundgestells (10) drehbar aufgenommen ist und,
dass in der ersten Montageplatte (11) des Grundgestells (10) eine Antriebswelle (21) und in der zweiten Montageplatte (12) ein Lagerzapfen (22) vorgesehen sind, welche zur auswechselbaren und drehend antreibbaren Aufnahme der verschiedenen Arbeitsgeräte (60, 70, 85, 95) axial verstellbar sind.

6. Kombinationsgerät nach Anspruch 5, **dadurch gekennzeichnet, dass** die Antriebswelle (21) über einen Riementrieb (18, 19, 20) drehend antreibbar ist und,
dass das jeweilige Arbeitsgerät (60, 70, 85, 95) mit der Antriebswelle (21) drehfest und lösbar gekoppelt ist.

7. Kombinationsgerät nach einem der Ansprüche 1 bis 6, **dadurch gekennzeichnet, dass** das Grundgestell (10) Teil eines Grundgerätes ist und,
dass das Grundgerät ein Fahrgestell (2) mit Rädern (7, 8) aufweist, über welche das Grundgerät zusammen mit dem Grundgestell (10) und dem jeweiligen Arbeitsgerät (60, 70, 85, 95) auf dem Untergrund (64) fahrbar ist.

8. Kombinationsgerät nach Anspruch 7, **dadurch gekennzeichnet, dass** die Räder (7, 8) am Fahrgestell (2) höhenverstellbar angeordnet sind und,
dass die Räder (7, 8) freilaufend ausgebildet sind oder über einen Antriebsmotor motorisch antreibbar sind.

9. Kombinationsgerät nach 7 oder 8, **dadurch gekennzeichnet, dass** der Grundrahmen (10) des Grundgerätes einen Antriebsmotor (17) aufweist, durch welchen das jeweils verwendete Arbeitsgerät (60, 70, 85, 95) über einen Riementrieb (18, 19, 20) oder dgl. drehend angetrieben ist.

10. Kombinationsgerät nach einem der Ansprüche 1 bis 3, **dadurch gekennzeichnet, dass** das Arbeitsgerät als eine mit im Betrieb umlaufenden Obermessern (71) versehene Mähspindel (70) ausgebildet ist, welche in Zusammenwirken mit einem im Umfangsbereich der umlaufenden Obermesser angeordneten Untermesser (72) zum Rasenmähen dient und,
dass sich das Gehäuse (23) in dieser Gerätekonfiguration in seiner dritten Betriebsstellung befindet.

11. Kombinationsgerät nach Anspruch 10, **dadurch gekennzeichnet, dass** die Mähspindel (70) und das Untermesser (72) eine gemeinsame Baugruppe bilden und zusammen in das Kombinationsgerät einsetzbar sind.

12. Kombinationsgerät nach einem der Ansprüche 1 bis 3, **dadurch gekennzeichnet, dass** das Arbeitsgerät als eine mit im Betrieb umlaufenden Federelementen (86) versehene Vertikutierwalze (85) ausgebildet ist und,
dass sich das Gehäuse (23) in dieser Gerätekonfiguration in seiner dritten Betriebsstellung befindet oder
dass das Arbeitsgerät als eine mit im Betrieb umlaufenden Borsten versehene Kehrwalze ausgebildet ist und,
dass sich das Gehäuse (23) in dieser Gerätekonfiguration wahlweise in seiner ersten oder dritten Betriebsstellung befindet.

13. Kombinationsgerät nach Anspruch 11 oder 12, **dadurch gekennzeichnet, dass** in Fahrtrichtung (Pfeil 63) hinter dem Arbeitsgerät (70, 85) eine Auffangeinrichtung vorgesehen ist, welche zum Auffangen von Gras, Vertikutiergut oder auch Kehrgut und zum Schutz einer hinter dem Kombinationsgerät (1) gehenden Person dient.

14. Kombinationsgerät nach einem der Ansprüche 1 bis 3, **dadurch gekennzeichnet, dass** das Arbeitsgerät als eine mit im Betrieb umlaufenden Hackmessern (96) versehene Hackwalze (95) ausgebildet ist und
dass sich das Gehäuse (23) in dieser Gerätekonfiguration in seiner zweiten Betriebsstellung befindet oder
dass das Arbeitsgerät als Frästrommel (60) zum Schneefräsen ausgebildet ist und
dass sich das Gehäuse (23) in dieser Gerätekonfiguration in seiner ersten Betriebsstellung befindet.

15. Kombinationsgerät nach einem der Ansprüche 1 bis 14, **dadurch gekennzeichnet, dass** das Kombinationsgerät derart ausgebildet ist, dass zumindest seine die Arbeitsgeräte aufnehmenden Bauteile als Anbaugerät an einem Kommunalfahrzeug, einem Rasentraktor oder dgl. anbaubar sind.

## Claims

1. Combination device (1) for executing various tasks such as snow throwing, mowing, scarifying, tilling, or similar ones with a range of inter-changeable work implements (60, 70, 85, 95), which adapt to the said tasks in the respective operating configurations, whereby a base frame (10) is made available, on to which the respective work implement (60, 70, 85, 95) can be mounted and driven in rotation and whereby the individually built in said work implement (60, 70, 85, 95) is partially enclosed by a housing (23) that extends parallel to the rotational axis of the said work implement,
**characterized in**
**that** the housing (23) can be rotated relatively to the base frame (10) about an axis parallel to the rotational axis of the respective said work implement (60, 70, 85, 95), and which can be fixed according to the said task in its respective operating configuration.

2. Combination device according to claim 1, **characterized in that** the said housing (23) encloses the said work implements (60, 70, 85, 95) over a wrap angle, the extent of which is chosen in such a way that the housing (23) opens up in a first operating configuration considerably towards the front and bottom, in a second operating configuration considerably towards the bottom and in a third operating configuration considerably towards the rear and bottom.

3. Combination device according to claim 1 or 2, **characterized in that** the said housing (23) is mounted with the respective front and rear rollers or running wheels (43, 44 or 45) along its front and back edges (41 and 46/1) both of which extending parallel to the rotational axis of the said work implements, and that the said housing (23) in its first operating configuration is supported on its rear rollers or running wheels (45) on the ground (64), and that the said housing (23) in its second operating configuration is not supported by any of its said rollers or running wheels (43, 44 or 45) on the ground (64), and that the said housing (23) in its third operating configuration is supported on its front rollers or running wheels (43, 44) on the ground (64).

4. Combination device according to claim 2 or 3, **characterized in that** the said housing (23) is attached with a scraper (46) in the region along its rear edge (46/1), whose purpose is to pick up snow during snow throwing, and that the said housing (23), in its first operating configuration, exhibits an opening (47) in the top wall region that is provided with a removable snow throwing device (49).

5. Combination device according to one of the claims 1 to 4, **characterized in that** the said housing (23) with two side walls (25, 26) is journalled between two assembly side plates (11, 12) of the base frame (10) and that in the first assembly side plate (11) of the said base frame (10) a transmission axle (21) and, in the second assembly side plate (12), a bearing pin (22) are provided, which are axially movable for receiving of the various work implements (60, 70, 85, 95) in a changeable and a rotating drivable manner.

6. Combination device according to claim 5, **characterized in that** the transmission axle (21) can be driven with a pulley belt (18, 19, 20), and that the respective work implement (60, 70, 85, 95) is coupled in firm rotation with and releasable from the said transmission axle (21).

7. Combination device according to claims 1 to 6, **characterized in that** the base frame (10) forms part of the basic machine, and that the basic machine exhibits a wheel frame (2) with wheels (7, 8) attached, over which the basic machine can travel together with the said base frame (10) and the respective work implement (60, 70, 85, 95) on the ground (64).

8. Combination device according to claim 7, **characterized in that** the said wheels (7, 8) on the said wheel frame (2) are height adjustable, and that the said wheels (7, 8) can rotate freely or be motor driven.

9. Combination device according to 7 or 8, **characterized in that** the said base frame (10) of the basic machine is provided with a driving motor (17), which rotary drives the respective work implement (60, 70, 85, 95) in use via a pulley belt or similar transmission (18, 19, 20).

10. Combination device according to one of the claims 1 to 3, **characterized in that** the said work implement in the form of a mowing spindle (70) comprises a set of running upper blades (71) that interact with a lower blade (72) stationed at the periphery of the rotating upper blades so as to provide the lawn mowing function, and that the housing (23) is set up in its third operating configuration.

11. Combination device according to claim 10, **characterized in that** the said mowing spindle (70) and the said lower blade (72) are combined into one single module, all of which can then be inserted into the said combination device (1).

12. Combination device according to claims 1 to 3, **characterized in that** the said work implement comprises a running cylindrical set of spring elements (86) to form the scarifying drum (85) and that the said housing (23) is set up in its third operating configuration, or that the said work implement comprises a running cylindrical set of brush elements to form the sweeping roller and that the said housing (23) is set up in its first or third operating configuration.

13. Combination device according to claims 11 or 12, **characterized in that** provision is made for a collection basket at the rear of the work implements (70, 85) in the direction of travel (arrow 63), the purpose of which is to collect grass, clippings from scarifying or swept material and to protect the user who walks behind the combination device (1).

14. Combination device according to claims 1 to 3, **characterized in that** the work implement comprises cleavers (96) rotating during operation and forming the tilling drum (95) and that the said housing (23) is set up in its second operating configuration, or that the work implement comprises an auger (60) for the purpose of snow throwing and that the housing (23) is set up in its first operating configuration.

15. combination device according to claims 1 to 14, **characterized in that** the work implements and the related attachment components of the combination device can be mounted onto say a communal vehicle, a mowing tractor, or the like as accessory equipment.

## Revendications

1. Appareil combiné (1) pour effectuer différentes tâches, comme des travaux de déneigement, de tonte, de sarclage, de binage ou analogues, avec plusieurs outils de travail interchangeables (60, 70, 85, 95) qui sont adaptés par leur configuration respective à la tâche respective, sachant qu'il est prévu un bâti de base (10) dans lequel l'outil de travail respectif (60, 70, 85, 95) est peut être reçu et entraîné en rotation, et sachant que l'outil de travail respectivement installé (60, 70, 85, 95) est entouré au moins partiellement par un carter (23) s'étendant parallèlement à l'axe de rotation de l'outil de travail,
**caractérisé en ce que** le carter (23) est rotatif par rapport au bâti de base (10) autour d'un axe parallèle à l'axe de rotation de l'outil de travail respectif (60, 70, 85, 95), et peut être immobilisé dans différentes positions de service en correspondance avec la tâche respective.

2. Appareil combiné selon la revendication 1, **caractérisé en ce que** le carter (23) entoure l'outil de travail (60, 70, 85, 95) sur un angle inscrit qui est choisi de telle sorte que le carter (23) est ouvert essentiellement vers l'avant et le bas dans une première position de service, essentiellement vers le bas dans une deuxième position de service, et essentiellement vers le bas et l'arrière dans une troisième position de service.

3. Appareil combiné selon la revendication 1 ou 2, **caractérisé en ce que** le carter (23) est respectivement pourvu de roulettes ou de roues avant et arrière (43, 44 ou 45) dans la région de ses deux arêtes terminales avant et arrière (41 et 46/1) s'étendant parallèlement à l'axe de rotation de l'outil de travail,
**en ce que** le carter (23), dans sa première position de service, s'appuie sur le sol (64) par ses roulettes ou roues arrière (45),
**en ce que** le carter (23), dans sa deuxième position de service, ne s'appuie pas sur le sol (64) par ses roulettes ou roues (43, 44 ou 45),
et **en ce que** le carter (23), dans sa troisième position de service, s'appuie sur le sol (64) par ses roulettes ou roues avant (43, 44).

4. Appareil combiné selon la revendication 2 ou 3, **caractérisé en ce que** le carter (23) est pourvu, dans la région de son arête terminale arrière (46/1), d'une bande racleuse (46) qui sert à recevoir la neige lors du déneigement,
et **en ce que** le carter (23) présente, dans sa région de paroi située sur le dessus dans sa première position de service, une ouverture (47) qui est pourvue d'un dispositif d'évacuation amovible (49).

5. Appareil combiné selon l'une des revendications 1 à 4, **caractérisé en ce que** le carter (23) est, au moyen de deux parois latérales (25, 26), reçu à rotation entre deux plaques de montage (11, 12), disposées sur les côtés, du bâti de base (10),
et **en ce qu'**un arbre d'entraînement (21) est prévu dans la première plaque de montage (11) du bâti de base (10), et un tourillon (22) est prévu dans la deuxième plaque de montage (12), qui peuvent être déplacés axialement afin de recevoir de manière interchangeable et avec possibilité d'entraînement en rotation les différents outils de travail (60, 70, 85, 95).

6. Appareil combiné selon la revendication 5, **caractérisé en ce que** l'arbre d'entraînement (21) peut être entraîné en rotation au moyen d'une transmission par courroie (18, 19, 20),
et **en ce que** l'outil de travail respectif (60, 70, 85, 95) est accouplé à l'arbre d'entraînement (21) en solidarité de rotation et de manière amovible.

7. Appareil combiné selon l'une des revendications 1 à 6, **caractérisé en ce que** le bâti de base (10) fait partie d'un appareil de base,
et **en ce que** l'appareil de base présente un châssis (2) pourvu de roues (7, 8), au moyen desquelles l'appareil de base peut être déplacé sur le sol (64) conjointement avec le bâti de base (10) et l'outil de travail respectif (60, 70, 85, 95).

8. Appareil combiné selon la revendication 7, **caractérisé en ce que** les roues (7, 8) sont disposées sur le châssis (2) avec possibilité de réglage en hauteur, et les roues (7, 8) peuvent tourner ou faire mobiliser.

9. Appareil combiné selon la revendication 7 ou 8, **caractérisé en ce que** le bâti de base (10) de l'appareil de base présente un moteur d'entraînement (17), au moyen duquel l'outil de travail respectivement utilisé (60, 70, 85, 95) est entraîné en rotation par l'intermédiaire d'une transmission par courroie (18, 19, 20) ou analogue.

10. Appareil combiné selon l'une des revendications 1 à 3, **caractérisé en ce que** l'outil de travail est réalisé sous la forme d'un cylindre de tonte (70) pourvu de lames de coupe supérieures (71) rotatives en fonctionnement, qui sert à la tonte de gazon en coopération avec une lame inférieure (72) disposée dans la région de la périphérie des lames supérieures rotatives,
et **en ce que** le carter (23), dans cette configuration d'outil, se trouve dans sa troisième position de service.

11. Appareil combiné selon la revendication 10, **caractérisé en ce que** le cylindre de tonte (70) et la lame inférieure (72) forment un ensemble et peuvent être mis en place conjointement dans l'appareil combiné.

12. Appareil combiné selon l'une des revendications 1 à 3, **caractérisé en ce que** l'outil de travail est réalisé sous la forme d'un cylindre de sarclage (85) pourvu d'éléments à ressort (86) rotatifs en fonctionnement,
et **en ce que** le carter (23), dans cette configuration d'outil, se trouve dans sa troisième position de service.
ou **en ce que** l'outil de travail est réalisé sous la forme d'un cylindre de balayage pourvu de poils de brosse rotatifs en service,
et **en ce que** le carter (23), dans cette configuration d'outil, se trouve au choix dans sa première ou dans sa troisième position de service.

13. Appareil combiné selon la revendication 11 ou 12, **caractérisé en ce qu'**un équipement collecteur est prévu en arrière de l'outil de travail (70, 85) dans le sens de marche (flèche 63), et il sert à recueillir l'herbe, le matériau sarclé ou le matériau balayé, et à protéger une personne marchant derrière l'appareil combiné (1).

14. Appareil combiné selon l'une des revendications 1 à 3, **caractérisé en ce que** l'outil de travail est réalisé sous la forme d'un cylindre de binage (95) pourvu de lames de binage (96) rotatives en fonctionnement,
et **en ce que** le carter (23), dans cette configuration d'outil, se trouve dans sa deuxième position de service,
ou **en ce que** l'outil de travail est réalisé sous la forme d'un tambour de fraisage (60) pour le déneigement,
et **en ce que** le carter (23), dans cette configuration d'outil, se trouve dans sa première position de service.

15. Appareil combiné selon l'une des revendications 1 à 14, **caractérisé en ce que** l'appareil combiné est conçu de telle sorte qu'au moins ses éléments recevant les outils de travail peuvent être montés sous la forme d'un accessoire sur un véhicule de voirie, une tondeuse autoportée ou analogues.
